# EUROPEAN PATENT APPLICATION

(11) **EP 3 485 844 A1**
(43) Date of publication of application: **22.05.2019**
(21) Application number: 18205598.8
(22) Date of filing: 12.11.2018
(51) Int. Cl.: A61C 17/22, A61C 17/00, A61C 19/06

(54) **TOOTH-WHITENING DEVICE**

(30) Priority: 21.11.2017 JP 2017223905
(71) Applicant: Panasonic Intellectual Property Management Co., Ltd., Osaka-shi, Osaka 540-6207 (JP)
(72) Inventor: OTSUKA, Risa, Osaka-shi, Osaka 540-6207 (JP); NUNOMURA, Mahito, Osaka-shi, Osaka 540-6207 (JP)
(74) Representative: Grünecker Patent- und Rechtsanwälte PartG mbB

(57) **Abstract**

Tooth-whitening device (10) includes discharger (22) configured to generate a tooth-whitening fluid by applying electric discharge to carbon dioxide gas, feeder (25) configured to supply the carbon dioxide gas to the discharger, humidifier (23) configured to generate humidified gas, outlet (40) provided with a supply port through which the tooth-whitening fluid is supplied into an oral cavity, and hollow part (30) configured to guide to outlet (40) a gas containing the tooth-whitening fluid generated by discharger (22).

## Description

### BACKGROUND

### 1. Technical Field

The present disclosure relates to a tooth-whitening device that supplies a tooth-whitening fluid to teeth.

### 2. Description of the Related Art

A known tooth-whitening device supplies a tooth-whitening fluid to teeth, using a mouthpiece. For example, a tooth-whitening device disclosed in Japanese Patent Unexamined Publication No. 2015-229084 generates a tooth-whitening fluid by electric discharge, and supplies air containing the tooth-whitening fluid from a mouthpiece into an oral cavity.

### SUMMARY

A conventional tooth-whitening device also generates an acidic component in line with electric discharge. In general, it is known that when acidity in the oral cavity becomes too high, due to various conditions, teeth may be adversely affected. Accordingly, generation of the acidic component in the oral cavity is preferably prevented as much as possible.

A tooth-whitening device of the present disclosure includes a discharger that applies electric discharge to carbon dioxide gas to generate a tooth-whitening fluid.

The tooth-whitening device of the present disclosure can successfully whiten teeth.

### BRIEF DESCRIPTION OF DRAWINGS

Fig. 1 is a perspective view of a tooth-whitening device in a preferred embodiment of the present disclosure.
Fig. 2 is a block diagram of the tooth-whitening device in the preferred embodiment of the present disclosure.
Fig. 3 is a graph showing an example of test results.

### DETAILED DESCRIPTION

A tooth-whitening device in a first exemplary embodiment of the present disclosure includes a discharger that applies electric discharge to carbon dioxide gas, so as to generate a tooth-whitening fluid. When electric discharge is applied to carbon dioxide gas, less acidic component is formed. Accordingly, a condition that the acidic component attaches to teeth for a long time while using the tooth-whitening device hardly occurs in this exemplary embodiment.

A tooth-whitening device in a second exemplary embodiment of the present disclosure further includes a feeder that supplies carbon dioxide gas to the discharger, in addition to the first exemplary embodiment. In this exemplary embodiment, the discharger stably generates the tooth-whitening fluid.

A tooth-whitening device in a third exemplary embodiment of the present disclosure includes a gas cylinder for storing carbon dioxide gas in the feeder, and the gas cylinder is detachably attached to the feeder, in addition to the second exemplary embodiment. In this exemplary embodiment, the gas cylinder is used as a supply source of carbon dioxide gas, and thus a structure of the feeder can be simplified.

A tooth-whitening device in a fourth exemplary embodiment of the present disclosure further includes a humidifier for generating humidified gas, in addition to the first exemplary embodiment. In this exemplary embodiment, humidified gas can be supplied into the oral cavity together with the tooth-whitening fluid, and thus the tooth-whitening fluid can act on moistened teeth.

A tooth-whitening device in a fifth exemplary embodiment of the present disclosure further includes an outlet provided with a supply port through which the tooth-whitening fluid is supplied into the oral cavity, and a hollow part for guiding to the outlet a gas containing tooth-whitening fluid generated by the discharger, in addition to the first exemplary embodiment. In this exemplary embodiment, the tooth-whitening fluid generated by the discharger is supplied into the oral cavity through the hollow part and the outlet. Since the discharger is not included in the outlet, the outlet is light in weight. This improves usability.

In a tooth-whitening device in a sixth exemplary embodiment of the present disclosure, the hollow part includes an inner periphery that forms a gas flow path, in addition to the fifth exemplary embodiment. A material configuring the inner periphery includes a material that is positively-charged more easily than silicon. The tooth-whitening fluid contains an active ingredient having tooth-whitening effect. The active ingredient is, for example, OH radicals. A positively-charged substance adsorbs less OH radicals. In this exemplary embodiment, when the hollow part as configured above can supply the tooth-whitening fluid containing a large amount of active ingredient into the oral cavity through the hollow part and the outlet.

In a tooth-whitening device in a seventh exemplary embodiment of the present disclosure, the outlet includes an exhaust port through which a gas inside the oral cavity is released outside, in addition to the fifth exemplary embodiment. In this exemplary embodiment, a structure of the device can be simplified, compared to a structure of releasing the gas inside the oral cavity to a main body of the tooth-whitening device.

In a tooth-whitening device in an eighth exemplary embodiment of the present disclosure, a flow rate of the tooth-whitening fluid supplied from the discharger is less than 1l/min. In this exemplary embodiment, a flow velocity of the tooth-whitening fluid in the oral cavity is slow, and thus a long reaction time can be secured between a component sticking to teeth and the tooth-whitening fluid. A tooth-whitening effect can thus be enhanced.

A preferred embodiment of the tooth-whitening device of the present disclosure is described below with reference to attached drawings.

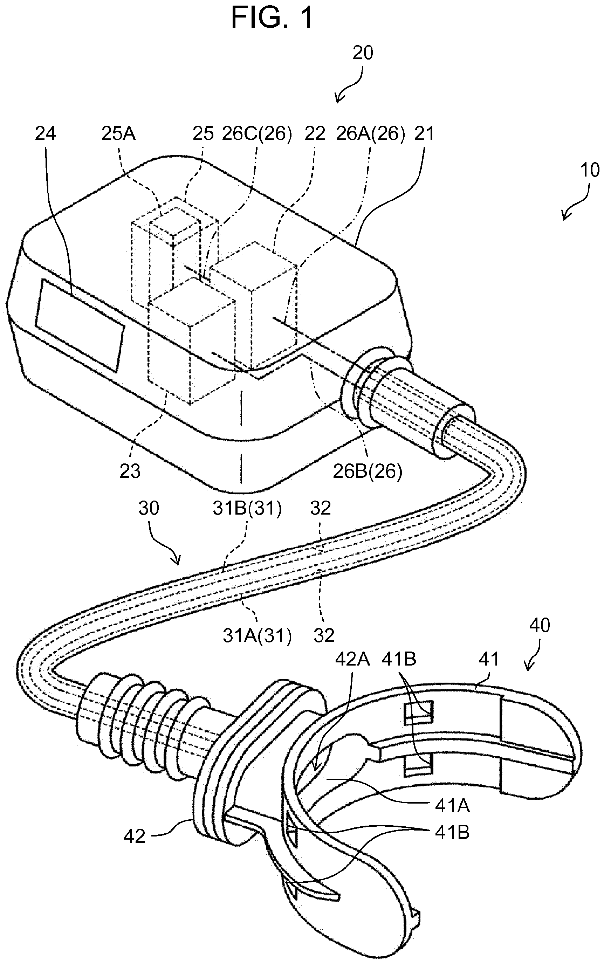

Fig. 1 is an example of tooth-whitening device 10 that supplies to teeth the tooth-whitening fluid for whitening teeth. The tooth-whitening fluid contains an active ingredient having a tooth-whitening effect. The tooth-whitening fluid is, for example, a gas containing charged particulate water. The charged particulate water contains radical species, which is the active ingredient. An example of the radical species is OH radicals. The charged particulate water containing radicals is, for example, nano-meter size fine droplets. Dew condensation of the charged particulate water containing radicals is generated by cooling an discharge electrode, for example, in discharger 22, which is described later, and then high voltage may be applied to the discharge electrode retaining dew condensation water.

As shown in Fig. 1, major components configuring tooth-whitening device 10 are main body 20, hollow part 30, and outlet 40.

Main body 20 is, for example, a box-shaped unit designed to be stably placed on various installation surfaces, including a rack, furniture, table, and floor. The shape and size of main body 20 can be selected arbitrarily. For example, the shape and size of main body 20 are determined such that the user can carry main body 20 with a single hand.

Main body 20 includes housing 21, discharger 22, humidifier 23, and operation part 24. Housing 21 is a resin box that is configured to house various components in its inner space. Discharger 22 is provided inside housing 21. Discharger 22 generates the tooth-whitening fluid by electric discharge.

Humidifier 23 is provided inside housing 21. Humidifier 23 generates humid gas that is humidified gas. For example, humidifier 23 humidifies air.

Operation part 24 is a user interface provided on housing 21, and includes a button and switch. The user can select various conditions for operating tooth-whitening device 10 by operating operation part 24.

For example, the user can determine whether or not to activate discharger 22 and whether or not to activate humidifier 23 by using this operation part 24. The user can also designate a flow rate of the gas containing the tooth-whitening fluid supplied from main body 20, and a flow rate of the gas containing humidified gas supplied from main body 20.

Hollow part 30 connects main body 20 and outlet 40 such that hollow part 30 guides to outlet 40 the gas containing the tooth-whitening fluid generated by discharger 22. Hollow part 30 is, for example, a flexible hose.

A method of attaching hollow part 30 to main body 20 and outlet 40 can be selected arbitrarily. Hollow part 30 may be detachably connected to main body 20 and outlet 40. Or, hollow part 30 may be fixed onto main body 20 and outlet 40.

A length of hollow part 30 can be selected arbitrarily. For example, the length of hollow part 30 is selected from a range between 0.5 cm and 150 cm. In an example shown in Fig. 1, the length of hollow part 30 is 30 cm.

Gas flow path 31 is formed inside hollow part 30. Flow path 31 includes first flow path 31A and second flow path 31B. First flow path 31A guides to outlet 40 the gas containing the tooth-whitening fluid generated by discharger 22. Second flow path 31B guides to outlet 40 the gas containing humidified gas generated by humidifier 23.

First flow path 31A and second flow path 31B are partitioned inside hollow part 30 so that the gas flowing in first flow path 31A and the gas flowing in second flow path 31B do not mix.

A material for configuring hollow part 30 can be selected arbitrarily. Preferably, at least a material configuring inner periphery 32 of hollow part 30 is a material that is positively charged more easily than silicon. For example, polypropylene, nylon, vinyl chloride, and aluminum are used.

A material configuring hollow part 30 is selected with reference to the triboelectric series. In the preferred embodiment shown in Fig. 1, entire hollow part 30, including inner periphery 32, is configured with vinyl chloride from the viewpoint of its ease of charging and flexibility. A material easy to be positively-charged adsorbs less OH radicals. Accordingly, when the gas containing tooth-whitening fluid passes through first flow path 31A, OH radicals contained in the tooth-whitening fluid are hardly adsorbed to inner periphery 32 of hollow part 30.

Outlet 40 is configured to supply the gas fed through hollow part 30 into an oral cavity. Outlet 40 preferably has a shape that can be held in the mouth or fitted around the mouth, so as to supply the gas into the oral cavity. For example, outlet 40 is a mouthpiece.

A material configuring outlet 40 can be selected arbitrarily. For example, a resin material is used. A material configuring outlet 40 is preferably a material that is positively charged more easily than silicon. Outlet 40 is divided into curved part 41 and connector 42. Curved part 41 is a part that faces the front of teeth when outlet 40 is held in the mouth. Curved part 41 is curved along alignment of teeth.

Curved part 41 has supply port 41A for supplying the gas into the oral cavity, and exhaust port 41B for releasing the gas in the oral cavity outside the oral cavity. Supply port 41A and exhaust port 41B are holes passing through curved part 41. The shape, size, and number of supply ports 41A and exhaust ports 41B can be selected arbitrarily. Supply port 41A and exhaust port 41B may be formed in any portion of curved part 41.

In the preferred embodiment shown in Fig. 1, one supply port 41A is formed at the center of curved part 41, and two exhaust ports 41B are formed each on both sides of supply port 41A. An opening area of exhaust port 41 is smaller than an opening area of supply port 41A.

Connector 42 is connected to hollow part 30. Connector 42 guides the gas supplied from hollow part 30 to supply port 41A. Gas flow path 42A connected to supply port 41A are formed inside connector 42. First flow path 31A and second flow path 31B of hollow part 30 are connected to flow path 42A. The gas flowing in first flow path 31A is mixed with the gas flowing in second flow path 31B in flow path 42A.

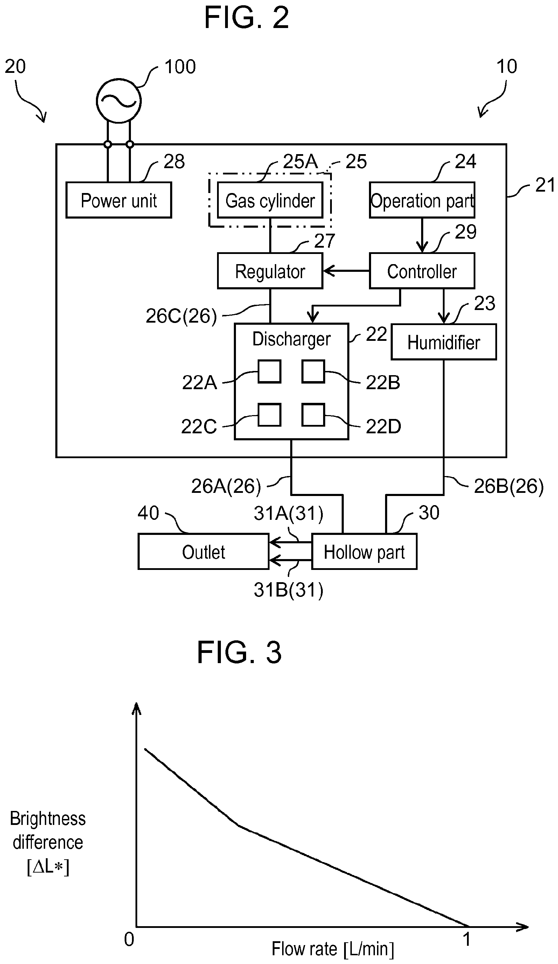

Fig. 2 is a block diagram of tooth-whitening device 10. As shown in Fig. 2, main body 20 further includes feeder 25, multiple pipes 26, regulator 27, power unit 28, and controller 29. These components are disposed inside housing 21.

Feeder 25 supplies to discharger 22 a material gas used for generating the tooth-whitening fluid. Feeder 25 includes gas cylinder 25A storing the material gas (e.g., carbon dioxide gas) and cylinder attachment part (not illustrated) configured to set detachable gas cylinder 25A.

A type of the material gas can be selected arbitrarily. Preferably, a gas that generates less acidic component than air when used for generating tooth-whitening fluid by electric discharge is selected. Other than carbon dioxide gas, for example, oxygen gas, nitrogen gas, and argon gas are used.

Multiple pipes 26 include first pipe 26A, second pipe 26B, and third pipe 26C. First pipe 26A is connected to a gas outlet of discharger 22. First flow path 31A of hollow part 30 is connected to a gas flow path inside first pipe 26A. Second pipe 26B is connected to a gas outlet of humidifier 23. Second flow path 31B of hollow part 30 is connected to a gas flow path inside second pipe 26B. Third pipe 26C is connected to a gas outlet of feeder 25 and a gas inlet of discharger 22.

A space is formed for placing gas cylinder 25A in the cylinder attachment part of feeder 25. This space is covered with a cover (not illustrated) provided on housing 21. The cover is opened to attach gas cylinder 25A to the cylinder attachment part or remove gas cylinder 25A from the cylinder attachment part.

Regulator 27 is provided on third pipe 26C. Regulator 27 is a solenoid valve for adjusting a flow rate of the material gas flowing in third pipe 26C.

Power unit 28 includes a rectifying circuit and a capacitor. The rectifying circuit includes a diode bridge, and full-wave rectifies AC power supplied from commercial power supply 100. The capacitor removes noise in power rectified by the rectifying circuit. Power unit 28 supplies power to discharger 22, humidifier 23, regulator 27, and controller 29.

Controller 29 is, for example, configured with CPU (Central Processing Unit) or MPU (Micro Processing Unit). Controller 29 controls discharger 22, humidifier 23, and regulator 27 in response to the operation input to operation part 24.

A structure of discharger 22 can be selected arbitrarily. For example, discharger 22 includes drive circuit 22A, resonance circuit 22B, laminated piezoelectric transformer 22C, and electrode 22D.

Drive circuit 22A changes frequency of the power supplied from power unit 28. More specifically, drive circuit 22A includes a single-phase full-bridge inverter. This inverter has two arms connected in parallel. Each arm has two MOSFETs (metal-oxide-semiconductor field-effect transistors) connected in series.

Drive circuit 22A generates AC power with frequency higher than the frequency of AC power supplied from commercial power supply 100 by turning on and off these four MOSFETs.

Resonance circuit 22B increases the voltage supplied from drive circuit 22A. More specifically, resonance circuit 22B is a series-type LC resonance circuit, and includes drive circuit 22A, reactor (not illustrated), and a primary electrode of laminated piezoelectric transformer 22C connected in series.

Laminated piezoelectric transformer 22C converts the voltage supplied from resonance circuit 22B to high voltage. More specifically, laminated piezoelectric transformer 22C includes the primary electrode electrically connected to resonance circuit 22B and a secondary electrode electrically connected to the electrode, and outputs transformed AC power to electrode 22D.

Electrode 22D causes electric discharge by the power supplied from laminated piezoelectric transformer 22C to generate charged particulate water. Electric discharge caused by electrode 22D is, for example, corona discharge. Radical species in the charged particulate water generated by discharge contains OH radicals.

Next is described an example of a whitening process using tooth-whitening device 10. First, outlet 40 is held in a mouth. Next, the power of main body 20 is turned on. Controller 29 controls discharger 22, humidifier 23, and regulator 27 in response to the operation input to operation part 24.

When discharger 22 is activated, the tooth-whitening fluid is generated. A gas containing the tooth-whitening fluid passes through first flow path 31A of hollow part 30, flow path 42A of outlet 40, and supply port 41A, and flows into the oral cavity.

When the charged particulate water reaches teeth, radical species contained in the charged particulate water takes electrons from coloring organic substance attached to each tooth. This decomposes the coloring organic substance, and whitens teeth.

Humidifier 23 is activated to generate humidified gas. The gas containing the humidified gas passes through second flow path 31B of hollow part 30, flow path 42A of outlet 40, and supply port 41A into the oral cavity. When moisture contained in the humidified gas attaches to teeth, the tooth-whitening fluid is supplied to moistened teeth. Since moisture of the humidified gas attaches to oral organs, such as gum and tongue, these organs are unlikely dried during the use of tooth-whitening device 10.

An action of tooth-whitening device 10 is described. A tooth-whitening effect of the tooth-whitening fluid is enhanced when the tooth-whitening fluid is supplied to moistened teeth. When an acidic component attaches to a tooth for a long period, a tooth surface may be adversely affected. In particular, when ae tooth is moistened, an effect of acidic component increases.

Taking this effect of moisture into account, tooth-whitening device 10 is configured to whiten a tooth efficiently while protecting the tooth. More specifically, tooth-whitening device 10 includes feeder 25 that supplies carbon dioxide gas to discharger 22, and discharger 22 that generates the tooth-whitening fluid by applying electric discharge to the carbon dioxide gas supplied from feeder 25.

By applying electric discharge to the carbon dioxide gas, the gas after electric discharge does not substantially contain an acidic component. Accordingly, a gas containing the tooth-whitening fluid but not containing the acidic component is supplied from the outlet to the oral cavity. As a result, an adverse effect of the acidic component on the tooth surface can be suppressed.

Tooth-whitening device 10 includes humidifier 23 for generating humidified gas. The humidified gas generated by humidifier 23 is supplied into the oral cavity, and its moisture attaches to tooth. Accordingly, the tooth-whitening fluid acts on moistened teeth. As a result, teeth are efficiently whitened.

A test on the tooth whitening effect using tooth-whitening device 10 is described.

A test for confirming the whitening effect is conducted under the next test conditions. A specimen to be whitened by tooth-whitening device 10 is a porphyrin-dyed paper. This dyed paper is colored in brown. A material gas used for tooth-whitening device 10 is carbon dioxide gas. Multiple flow rates of the gas containing the tooth-whitening fluid supplied to the specimen from tooth-whitening device 10 are selected from a range between 0 L/minute and 5 L/minute.

In the test, the flow rate is adjusted using a flow-meter with valve installed in the middle of third pipe 26C. The flow rate is adjusted by adjusting an opening degree of the valve with reference to indicated flow rate.

The gas is supplied to the specimen in the next way. In the state outlet 40 is removed from hollow part 30, the specimen is disposed at a certain distance from the tip of hollow part 30. This certain distance is selected with reference to a distance between supply port 41A and tooth when outlet 40 is held in the mouth. More specifically, the certain distance is 1 mm.

Tooth-whitening device 10 continuously supplies the gas containing the tooth-whitening fluid to the specimen for a certain time. With reference to a single time of use for general whitening process, a certain time is selected. More specifically, the certain time is 30 minutes.

As an index for evaluating the tooth-whitening effect, a brightness difference is used. This brightness difference is a difference between a brightness of the specimen before the gas containing the tooth-whitening fluid is supplied and a brightness of the specimen after the gas containing the tooth-whitening fluid is supplied. The brightness difference is measured, using a color difference measuring instrument, based on the brightness of the specimen before the gas containing the tooth-whitening fluid is supplied and the brightness of the specimen after the gas containing the tooth-whitening fluid is supplied.

Fig. 3 is an example of a test result. The X axis indicates the flow rate of the gas containing the tooth-whitening fluid supplied to the specimen. The Y axis indicates the brightness difference measured by the color difference measuring device. As shown in Fig. 3, the brightness difference is almost 0, regardless of the flow rate of the gas containing the tooth-whitening fluid, when the flow rate of the gas containing the tooth-whitening fluid is 1 L/minute or above. In a range that the flow rate of the gas containing the tooth-whitening fluid is between greater than 0 L/minute and less than 1 L/minute, the brightness difference increases as the flow rate of the gas containing the tooth-whitening fluid decreases.

The whitening effect differs by the flow rate due to the next reason. When the flow rate is decreased, a flow velocity of the gas containing the tooth-whitening fluid becomes slower. The tooth-whitening fluid passes by after giving the whitening effect to the specimen. Accordingly, the whitening effect is enhanced. On the other hand, when the flow rate is increased, the flow velocity of the gas containing the tooth-whitening fluid becomes faster. The tooth-whitening fluid passes by the specimen before it can give the whitening effect. Accordingly, the whitening effect is weakened.

### Modified Example

The above preferred embodiment describes an embodiment mode of the tooth-whitening device of the present disclosure, and is thus not considered to be restrictive. For example, the tooth-whitening device of the present disclosure may include a modified example described below, in addition to the above preferred embodiment.

A structure of feeder 25 of main body 20 can be changed arbitrarily. For example, feeder 25 is provided on the outer face of housing 21. In this case, gas cylinder 25A attached to feeder 25 is also provided on the outer face of housing 21. Feeder 25 is, for example, a chamber configured to store material gas.

In this case, the material gas is filled in feeder 25 in the next way. A separately prepared gas cylinder and feeder 25 are connected, such as by a hose. The material gas is supplied from the gas cylinder to feeder 25, and the chamber is filled with the material gas. When the material gas is fully supplied, connection between the gas cylinder and feeder 25 is released.

A structure of power unit 28 can be changed arbitrarily. Power unit 28 is configured to supply the power of a primary battery or a secondary battery to discharger 22, humidifier 23, regulator 27, and controller 29.

A structure of hollow part 30 can be changed arbitrarily. A material configuring inner periphery 32 of hollow part 30 is, for example, different from a material configuring other portion of hollow part 30. To suppress adsorption of OH radicals, the material configuring inner periphery 32 is preferably a material that is easy to be positively charged.

A structure of outlet 40 can be changed arbitrarily. Outlet 40 is, for example, a mask covering the mouth for supplying gas into the oral cavity. The mask preferably includes a portion covering the mouth and a portion held in the mouth. The portion held in the mouth has a supply port for supplying the gas into the oral cavity. Outlet 40 may also be a nozzle that can be held in the mouth.

As described above, the present disclosure is applicable to home-use and business-use tooth-whitening devices.

## Claims

1. A tooth-whitening device comprising a discharger configured to generate a tooth-whitening fluid by applying electric discharge to carbon dioxide gas.

2. The tooth-whitening device of claim 1, further comprising a feeder configured to supply the carbon dioxide gas to the discharger.

3. The tooth-whitening device of claim 2,
wherein
the feeder includes a gas cylinder configured to store the carbon dioxide gas, and the gas cylinder is detachably attached to the feeder.

4. The tooth-whitening device of claim 1, further comprising a humidifier configured to generate humidified gas.

5. The tooth-whitening device of claim 1, further comprising:
an outlet including a supply port, the tooth-whitening fluid being supplied into an oral cavity through the supply port; and
a hollow part configured to guide a gas containing the tooth-whitening fluid generated by the discharger to the outlet.

6. The tooth-whitening device of claim 5,
wherein
the hollow part includes an inner periphery that forms a flow path of the gas, and
a material configuring the inner periphery contains a material that is positively charged more easily than silicon.

7. The tooth-whitening device of claim 5,
wherein
the outlet includes an exhaust port, and the gas in the oral cavity is released outside through the exhaust port.

8. The tooth-whitening device of claim 1,
wherein
a gas containing the tooth-whitening fluid is supplied into an oral cavity at a flow rate in a range between greater than 0 L/minute and less than 1 L/minute.
